# EUROPÄISCHE PATENTANMELDUNG

(11) **EP 1 347 553 A2**
(43) Veröffentlichungstag der Anmeldung: **24.09.2003**
(21) Anmeldenummer: 03003783.2
(22) Anmeldetag: 19.02.2003
(51) Int. Cl.: H02J 7/00

(54) **Verfahren zur Ladung von zwei Akkumulatoren mit einem Ladegerät**

(30) Priorität: 18.03.2002 DE 10211934
(71) Anmelder: Fujitsu Siemens Computers GmbH, 81739 München (DE)
(72) Erfinder: Grosshennig, Jörg, 86830 Schwabmünchen (DE)
(74) Vertreter: Epping Hermann & Fischer

(57) **Zusammenfassung**

Es ist ein Verfahren zur Ladung eines ersten und eines zweiten Akkumulators mit einem Ladegerät vorgeschlagen, bei dem ein erster Teilladevorgang mit konstantem Ladestrom und ein zweiter Teilladevorgang mit konstanter Ladespannung durchgeführt wird. Dabei ist zu jedem Zeitpunkt der Teilladevorgänge, mit dem Ladegerät ein Akkumulator wirksam verbunden. Ein erster Akkumulator wird während des ersten Teilladevorganges mit einem konstanten Ladestrom geladen und anstelle eines Wechsels von einem ersten Teilladevorgang zu einem zweiten Teilladevorgang am ersten Akkumulators erfolgt ein Wechsel auf einen zweiten Akkumulator. Die Ladung des zweiten Akkumulators beginnt mit dem ersten Teilladevorgang.

## Beschreibung

Verfahren zur Ladung von zwei Akkumulatoren mit einem Ladegerät.

Die Erfindung betrifft ein Verfahren zur Ladung von mindestens einem ersten und einem zweiten Akkumulator mit einem Ladegerät, bei dem pro Akkumulator ein erster Teilladevorgang mit konstantem Ladestrom und ein zweiter Teilladevorgang mit konstanter Ladespannung durchgeführt wird, wobei zu jedem Zeitpunkt der Teilladevorgänge nur ein Akkumulator durch das Ladegerät geladen wird und ein erster Akkumulator während des ersten Teilladevorganges mit einem konstanten Ladestrom geladen wird.

Verfahren zur Ladung von Akkumulatoren teilen sich in zumindest zwei Teilladevorgänge auf. Dabei ist der erste Teilladevorgang durch einen konstanten Ladestrom, und der zweite Teilladevorgang durch eine konstante Ladespannung geprägt. Während des ersten Teilladevorganges, der üblicherweise in kürzerer Zeit abgeschlossen ist als der zweite Teilladevorgang wird eine deutlich höhere Ladekapazität erreicht als im zweiten Teilladevorgang. Der erste Teilladevorgang ist demzufolge der Teiladevorgang mit der höheren Effektivität.

Sollen zwei Akkumulatoren mit einem Ladegerät geladen werden, so ist das Verfahren üblicherweise so gestaltet, daß beginnend mit dem ersten Akkumulator und dem ersten Teil adevorgang und darauffolgend der zweite Teilladevorgang an diesem Akkumulator abgeschlossen werden, und das gleiche Verfahren bei dem zweiten Akkumulator anschließend durchgeführt wird.

Demzufolge sind nach Beendigung des gesamten Ladevorgangs bei dem ersten Akkumulator 50% der Gesamtladekapazität beider Akkumulatoren erreicht. Um 100% der gesamten Ladekapazität zu erreichen, sind erster und zweiter Teilladevorgang an dem zweiten Akkumulator zu wiederholen. Somit folgen effiziente Teilladevorgänge nach weniger effizienten Teilladevorgängen. Bei kürzeren Ladezeiten kann sich dieser Sachverhalt als nachteilig erweisen.

Der Erfindung liegt die Aufgabe zugrunde, den Verlauf der Ladekapazität über beide Akkumulatoren so zu optimieren, daß ohne ein zusätzliches, oder ein leitungsfähigeres Ladegerät, auch bei kurzer Ladezeit, stets ein Maximum an verfügbarer Ladekapazität erreicht wird.

Diese Aufgabe wird durch das in Patentanspruch 1 vorgeschlagene Verfahren gelöst.

Es ist ein Verfahren zur Ladung eines ersten und eines zweiten Akkumulators mit einem Ladegerät vorgeschlagen, bei dem ein erster Teilladevorgang mit konstantem Ladestrom und ein zweiter Teilladevorgang mit konstanter Ladespannung durchgeführt wird. Dabei ist zu jedem Zeitpunkt der Teilladevorgänge, mit dem Ladegerät nur ein Akkumulator verbunden. Ein erster Akkumulator wird während des ersten Teilladevorganges mit einem konstanten Ladestrom geladen und anstelle eines Wechsels von einem ersten Teilladevorgang zu einem zweiten Teilladevorgang am ersten Akkumulators erfolgt ein Wechsel auf einen zweiten Akkumulator. Die Ladung des zweiten Akkumulators beginnt mit dem ersten Teilladevorgang.

Die Vorteile dieses Verfahrens sind darin begründet, daß zuerst an beiden Akkumulatoren nacheinander der erste Teilladevorgang mit konstantem Ladestrom durchgeführt wird. Da dieser Teilladevorgang deutlich effizienter in Bezug auf die Ladekapazität sich gestaltet, kann somit in kürzerer Zeit eine höhere Gesamtkapazität über beide Akkumulatoren erreicht werden, als dies bei dem üblichen Verfahren zu erreichen wäre.

Eine weitere Optimierung erhält das Verfahren dadurch, daß nach Abschluß des ersten Teilladevorgangs an beiden Akkumulatoren der zweite Teilladevorgang mit konstanter Ladespannung an beiden Akkumulatoren nacheinander fortgesetzt wird. Eine weitere vorteilhafte Ausgestaltung sieht die Verwendung von Lithium-Ion-Polymer-Akkumulatoren vor. Diese eignen sich besonders für das vorgeschlagene Verfahren, da diesen Akkumulatoren kein Memory-Effekt zu eigen ist.

Besonders vorteilhaft ist die Verwendung des Verfahrens für Akkumulatoren von mobilen elektronischen Geräten der Telekommunikation oder Datenverarbeitung, da diese Geräte oftmals klein und die mitgeführten Akkumulatoren aus diesem Grunde ebenso klein und aus diesem Grunde auch eine geringe Kapazität aufweisen, bietet es sich hier an, mit dem vorgeschlagenen Verfahren in möglichst kurzer Zeit eine möglichst hohe Ladekapazität über zwei Akkumulatoren zu erreichen.

Die Erfindung ist nicht auf zwei Akkumulatoren begrenzt sondern kann auch bei drei und mehr Akkumulatoren angewendet werden.

Im Folgenden ist die Erfindung durch ein Ausführungsbeispiel und zwei Figuren näher beschrieben.

Es zeigen:
- Figur 1:: eine schematische Darstellung des Anstiegs der Gesamt-Ladekapazität während der verschiedenen Teilladevorgänge nach dem erfindungsgemäßen Ladeverfahren,
- Figur 2:: ein Säulendiagramm zur Gegenüberstellung der erreichten Ladekapazitäten zu verschiedenen Zeitpunkten nach Stand der Technik und nach dem erfindungsgemäßen Ladeverfahren.

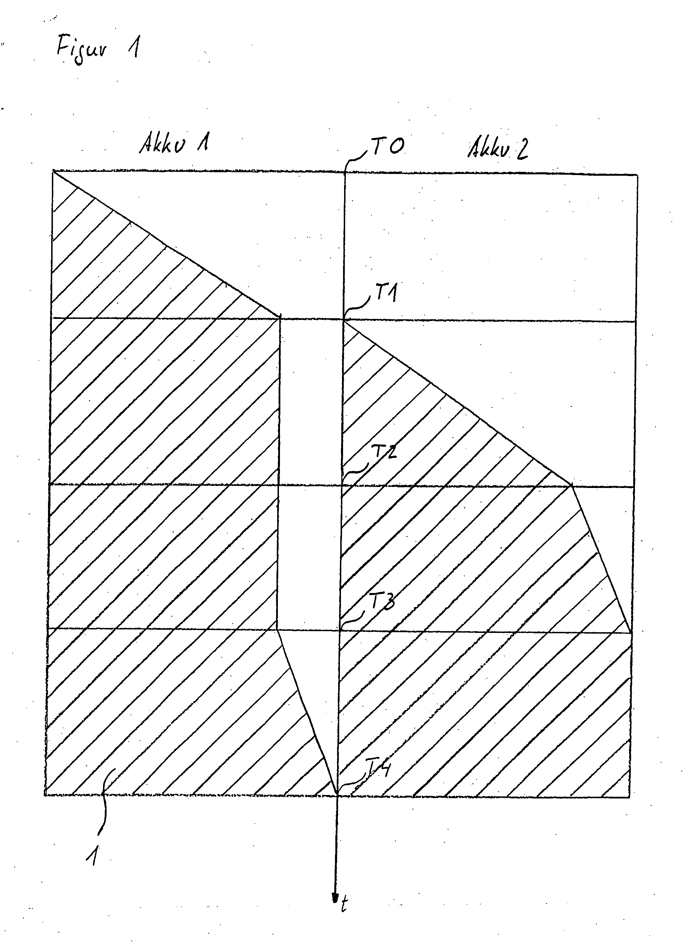

In Figur 1 stellt die Spalte 1 den Verlauf der Gesamt-Ladekapazität 1 des Akkumulators 1 dar. Spalte 2 stellt den Verlauf der Gesamt-Ladekapazität am Akku 2 während des Ladeverfahrens dar. Nach unten aufgetragen ist die Zeit t des Ladeverfahrens. Es sind weiter dargestellt die Zeitpunkte T0 bis T4, die jeweils den Endpunkt bzw. den Startpunkt eines Teilladevorgangs markieren.

In dem Zeitintervall T0 bis T1 wird am ersten Akkumulator der Teilladevorgang 1 mit konstantem Ladestrom durchgeführt. Dabei steigt die Ladekapazität des Akkumulators stark an. Am Akkumulator 2 findet in diesem Zeitintervall keine Ladung statt. Zum Zeitpunkt T1 ist der erste Teilladevorgang mit konstantem Ladestrom am Akkumulator 1 abgeschlossen.

Erfindungsgemäß wird zum Zeitpunkt T1 der Teilladevorgang 1 mit konstantem Ladestrom am Akkumulator 2 fortgesetzt. Dieser Vorgang wird in dem Zeitintervall T1 bis T2 durchgeführt, am Akkumulator 1 findet in diesem Zeitintervall kein Ladevorgang statt. Zum Zeitpunkt T2 findet ein Wechsel vom ersten Teilladevorgang zum zweiten Teilladevorgang statt. Zu diesem Zeitpunkt haben beide Akkumulatoren ca. 85% ihrer Gesamt-Ladekapazität erreicht.

Während des Zeitintervalls T2 bis T3 findet am Akkumulator 2 der zweite Teilladevorgang mit konstanter Ladespannung statt, so lange bis zum Zeitpunkt T3 der Akkumulator 2 zu 100% geladen ist.

Mit dem Zeitpunkt T3 endet der zweite Teilladevorgang am Akkumulator 2 und wird mit konstanter Ladespannung am Akkumulator 1 fortgesetzt, bis dieser zum Zeitpunkt T4 100% seiner Ladekapazität erreicht hat.

Das Beispiel verdeutlicht, daß das Verfahren ohne zusätzlichen Hardwareaufwand realisierbar ist. Eine geeignete Vorrichtung muß die Zeitpunkte T1, T2, T3 und T4, zum Beispiel durch Messung des Ladestroms, erkennen und den Ladevorgang zu dem jeweils anderen Akku mittels eines geeigneten Schalters wechseln und dort fortsetzen.

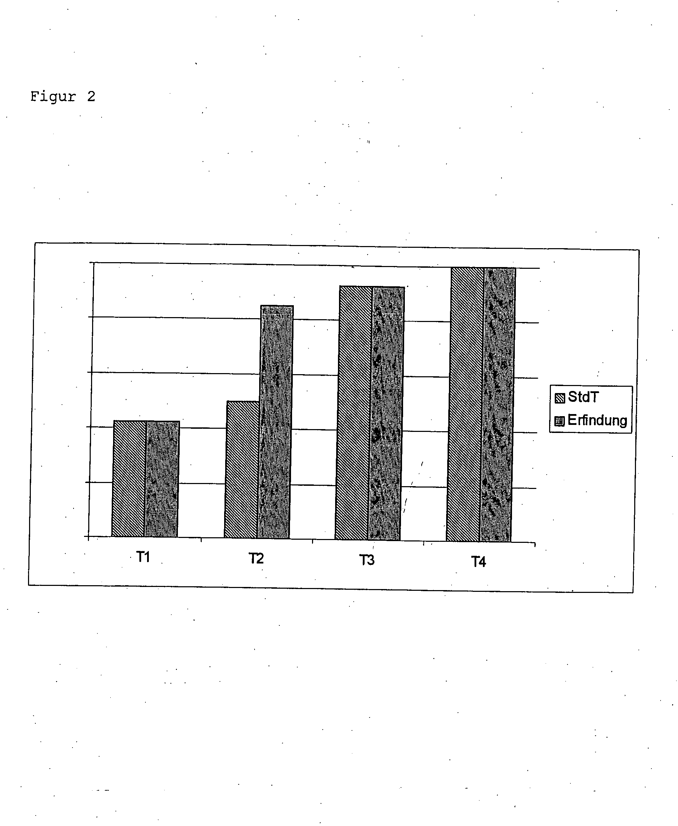

Das in Figur 2 dargestellte Säulendiagramm verdeutlicht durch die direkte Gegenüberstellung der erreichten Ladekapazitäten die höhere Effizienz des erfindungsgemäßen Verfahrens. Zum Zeitpunkt T2 ist die Ladung der beiden Akkumulatoren nach dem bisherigen Verfahren bei 50% ihrer Gesamtkapazität. Demgegenüber ist die Ladung der beiden Akkumulatoren nach dem erfindungsgemäßen Verfahren mit ca. 80% deutlich höher.

## Patentansprüche

1. Verfahren zur Ladung von mindestens einem ersten und einem zweiten Akkumulator mit einem Ladegerät, bei dem pro Akkumulator ein erster Teilladevorgang mit konstantem Ladestrom und ein zweiter Teilladevorgang mit konstanter Ladespannung durchgeführt wird, wobei zu jedem Zeitpunkt der Teilladevorgänge nur ein Akkumulator durch das Ladegerät geladen wird und ein erster Akkumulator wärend des ersten Teilladevorganges mit einem konstanten Ladestrom geladen wird, **dadurch gekennzeichnet, daß** nach dem ersten Teilladevorgang des ersten Akkumulators ein Wechsel auf einen zweiten Akkumulator erfolgt, dessen Ladung mit dem ersten Teilladevorgang beginnt.

2. Verfahren nach Patentanspruch 1, **dadurch gekennzeichnet, daß** nach der Beendigung des ersten Teilladevorgangs bei allen angeschlossenen Akkumulatoren der zweite Teilladevorgang der Reihe nach durchgeführt wird.

3. Verfahren nach einem der vorhergehenden Patentansprüche, **dadurch gekennzeichnet, daß** die verwendeten Akkumulatoren Lithium Ion Polymer Akkumulatoren sind.

4. Verfahren nach einem der vorhergehenden Patentansprüche, **dadurch gekennzeichnet, daß** die Akkumulatoren als Energieversorgung von tragbaren elektronischen Geräten der Datenverarbeitung oder der Telekomunikation dienen.
